# EUROPEAN PATENT SPECIFICATION

(11) **EP 4 312 676 B1**
(45) Date of publication and mention of the grant of the patent: **18.12.2024**
(21) Application number: 22713073.9
(22) Date of filing: 25.03.2022
(51) Int. Cl.: A47J 31/36, A47J 31/40, A47J 31/52, A47J 31/00

(54) **BEVERAGE PREPARATION MACHINE**
GETRÄNKEZUBEREITUNGSMASCHINE
MACHINE DE PRÉPARATION DE BOISSONS

(30) Priority: 26.03.2021 IT 202100007517; 26.03.2021 IT 202100007541
(43) Date of publication of application: 07.02.2024
(60) Divisional application: 23216661.1
(73) Proprietor: EVOCA S.p.A., 24030 Valbrembo (BG) (IT)
(72) Inventor: LIBERALI, Marco, 24030 Valbrembo (BG) (IT); INFANTI, Diego, 24030 Valbrembo (BG) (IT); ARRIGONI, Andrea, 24030 Valbrembo (BG) (IT)
(74) Representative: Studio Torta S.p.A.
(86) International application number: PCT/IB2022/052752
(87) International publication number: WO 2022/201115

(56) References cited:
- EP-B1- 2 642 906
- US-A1- 2014 272 025
- US-A1- 2015 110 935

## Description

### TECHNICAL FIELD OF THE INVENTION

The present invention relates to beverage preparation machines, in particular machine capable of brewing hot beverages from a brewing substance with pressurised hot water, such as coffee-based beverages, for example espresso coffee, instant coffee, long coffee or "fresh-brew", etc., tea-based beverages, or barley- or other cereal-based beverages.

The present invention finds advantageous, although not exclusive, application in automatic or semi-automatic professional espresso coffee machines, to which the following description will refer for descriptive convenience without thereby losing its generality.

### STATE OF THE ART

As is known, coffee is receiving great interest by the public and the hospitality industry, also known as Ho.Re.Ca., acronym for Hotel, Restaurant, Café. The interest in this beverage has increased transversally among consumers, the signs dedicated to the flavour and the experience of this beverage have multiplied, and this despite the crises that have occurred. In fact, the consumption in the last 40 years has passed from 80 to 160 million of 60 kg coffee bags and also the Millennials have contributed towards this increase, both in the traditional markets, and in the less mature ones where the coffee sector has been developed from scratch in regions such as China or the Far East.

Today the accent of the sector is on "premiumization", i.e. the tendency of consumers to purchase high-priced quality products, and on "specialties", while the espresso coffee is worth 10% of the business of the big chains.

In the field of professional espresso coffee machines there are different technologies for controlling the coffee brewing process so as to ensure a good quality of the product dispensed.

Some of these technologies are described, for example, in EP 1 867 262 B 1, EP 2 313 182 B1. EP 2 313 183 B1, EP 2 575 561 B1, EP 2 642 906 B1, EP 2 991 530 B1, EP 3 364 826 A1, WO 2015/124592 A1 and US 2015/110935 A1.

In particular, WO 2015/124592 A1 discloses a coffee machine comprising at least a hydraulic brewing circuit comprising at least a water supply pump; at least a water boiler hydraulically cascade-connected to the water supply pump; at least a brewing assembly hydraulically cascade-connected to the water boiler and through which a hot water flow rate is caused to flow to carry out a brewing cycle; means for regulating the water flow rate; means for measuring the water flow rate; and a feedback controller connected to the regulation means and the measurement means and configured to real-time the current value of the water flow rate measured by the measurement means with a corresponding reference value and to control the regulation means so as to eliminate any deviation of the current value of the water flow rate with respect to the corresponding reference value of the water flow rate.

US 2015/110935 A1 is directed toward regulating flow rate in an espresso coffee machine, during a multi-phase brewing process which includes a pre-brew and an extraction phase. During the pre-brew phase, coffee grounds are slowly pre-wetted and/or out-gassed with a first volume of water delivered at a first flow rate. During the extraction phase, a second volume of water is delivered, at a second flow rate, to extract espresso, where the second volume is delivered at a generally greater pressure than the first volume. The second flow rate is greater than the first flow rate. The flow rates, volumes, and pressures are regulated by the espresso machine, which includes a flow rate regulation assembly that comprises first and second flow paths and first and second valves. Baristas may vary the flow rate, volume, and pressure of water throughout the brewing process by opening, closing, or otherwise adjusting at least one of the valves.

EP 2 575 561 B1 discloses a beverage dispensing machine comprising a first hydraulic circuit including a water source, a first pump, first water heating means, brewing means selected from a brewing chamber and a capsule, the brewing means having inlet and outlet means, beverage collecting means for collecting brewed beverage leaving said brewing means and for dispensing said beverage to a container. The beverage dispensing machine further comprises a second hydraulic circuit including a second pump and second water heating means, the outlet of which is connected to the first hydraulic circuit at a location downstream to the brewing means with respect to the water flow in the first circuit. The first hydraulic circuit further comprises means to maintain in the brewing means a pressure substantially constant for a pre-set time, the pressure being less that the opening pressure for the brewing means.

The Applicant has experienced that the professional espresso coffee machines described in the above-listed prior art references, although satisfactory in many respects, still have wide margins for improvement as to the control of the coffee brewing process, which is a fundamental factor for the quality of the beverages dispensed.

For this purpose, WO 2021/005570 A1 in the name of the Applicant proposes a beverage preparation machine comprising at least a brewing assembly configured to brew a beverage from a brewing substance with a brewing liquid; a brewing liquid supply circuit to supply a brewing liquid to the brewing assembly; and an electronic control unit to control operation of the beverage preparation machine.

The brewing liquid supply circuit comprises a brewing liquid flow rate regulation solenoid valve to regulate the flow rate of the brewing liquid supplied to the brewing assembly; and a brewing liquid flow meter to measure, and output an electrical output indicative of, a quantity indicative of an amount of brewing liquid supplied to the brewing assembly.

The electronic control unit is electrically connected to the brewing liquid flow meter to receive the electrical output therefrom, and to the brewing liquid flow rate regulation solenoid valve to provide an electrical command thereto, and is configured to store data representative of at least a target brewing liquid flow rate profile indicative of a time development of a brewing liquid flow rate that is intended to be supplied to the brewing assembly during a beverage preparation cycle; and to closed-loop control the brewing liquid flow rate regulation solenoid valve based on the electrical output of the brewing liquid flow meter and on the target brewing liquid flow rate profile to cause the current brewing liquid flow rate supplied to the brewing assembly to follow the target brewing liquid flow rate profile.

### OBJECT AND SUMMARY OF THE INVENTION

The Applicant has experienced that the beverage preparation machine disclosed in WO 2021/005570 A1, although very satisfactory in many respects, still has a margin for improvement as to the control of the coffee brewing process.

Therefore, the object of the present invention is to provide an improved beverage preparation machine compared to the known ones as to the control of the coffee brewing process.

According to the present invention, a beverage preparation machine is provided, as claimed in the appended claims.

### BRIEF DESCRIPTION OF THE DRAWINGS

Figures 1, 2 and 7-11 show time profiles of physical quantities involved in a beverage preparation in a professional espresso coffee machine.

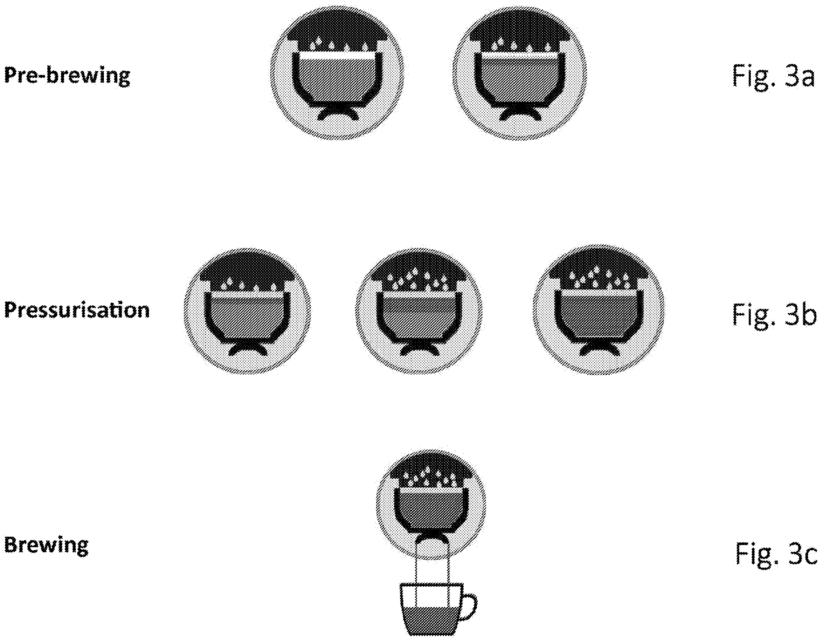

Figures 3a, 3b and 3c schematically show pre-brewing, pressurisation and brewing phases of a beverage preparation cycle.
Figure 4 is a perspective view an Applicant's professional espresso coffee machine.
Figures 5, 6a and 6b schematically show different hydraulic circuits and electronic control architectures of the professional espresso coffee machine shown in Figure 4.

### DETAILED DESCRIPTION OF PREFERRED EMBODIMENTS OF THE INVENTION

The present invention will now be described in detail with reference to the accompanying figures to enable a person skilled in the art to realise it and use it. Various modifications to the described embodiments will be immediately apparent to those skilled in the art and the generic principles described can be applied to other embodiments and applications without thereby departing from the protection scope of the present invention, as defined in the appended claims.

In particular, the block diagrams in the accompanying figures and described below are not to be understood as a representation of the structural features, i.e. construction limitations, but are to be interpreted as a representation of functional features, i.e. intrinsic properties of the devices and defined by the effects obtained, i.e. functional limitations, and which can be implemented in different ways, therefore so as to protect the functionalities thereof (possibility to operate).

In order to facilitate the understanding of the embodiments described herein, reference will be made to some specific embodiments and a specific lexicon will be used to describe them.

In a nutshell, the present invention relates to a technology, hereinafter referred to as DFC, which stands for *Dynamic Flow Control,* to dynamically regulate the flow rate of water supplied to brewing assemblies of professional espresso coffee machine so as to dynamically modify the coffee dispensing conditions, varying the organoleptic properties of the in-cup beverage accordingly.

The DFC technology differs from other existing technologies based on water flow rate regulation because it does not impose a predefined water flow rate during the different beverage preparation steps following the pre-brewing of the brewing substance.

In particular, the DFC technology originates from the Applicant's observation that there is no perfect water flow rate for all coffees: in fact, it is almost impossible to obtain two identical dispensing results from two coffee pads, even very similar to each other, while maintaining the same identical water flow rate throughout the beverage preparation cycle. And even trying to reduce as much as possible the variables involved that may modify the preparation conditions, these cannot be removed completely.

The particle size of the ground coffee, the amount of ground coffee, the distribution of the coffee powder, the compression force thereof inside the filter holder, whether obtained with manual or dynamometric presses, the homogeneity of the compression, etc., are all variables that cannot be perfectly controlled even by the most expert barista using the best equipment available. In these variable conditions, imposing predetermined water flow rates throughout the beverage preparation cycle may be counter-productive.

Let us consider for example the case where, following calibration of the coffee bean grinder, it has been found that the flow rate of water Q supplied to a brewing assembly during preparation of espresso coffee is a well-identified function of the time Q(t) or of the volume of dispensed water Q(v) or is even considered to be constant Q(t) = K or Q(v) = K from a certain point on of the beverage preparation. Normally, therefore, Q can be defined as the water flow rate that ensures that the in-cup beverage meets the requirements (taste, texture, cream quality) of the coffee dispensed.

Technologies already existing on the market try to regulate the water flow to exactly replicate the Q function, thus imposing predefined operating conditions, without considering that the variables involved can make the in-cup beverage extremely unsteady.

However, the Applicant has experienced that if, for example, the compressed coffee pad in the filter holder contains a few tenths of a gram less than the nominal amount (grinder error) or if it is not properly compressed (human error) or if the ground coffee has different characteristics in terms of moisture, particle size, composition, etc., while maintaining the same flow rate Q(t) or Q(v), the pressure inside the filter holder could vary considerably. A coffee pad that tends to "give way" (for example due to the *channeling* effect, or because the coffee is over-ripened and "wears out" quickly), opposes less resistance to the passage of water and the regulating system, in order to maintain the predetermined function Q(t) or Q(v), acts by braking the water flow that would naturally tend to increase. This could drastically reduce the water pressure during preparation to values that are completely outside the desired range and that guarantee the best extraction.

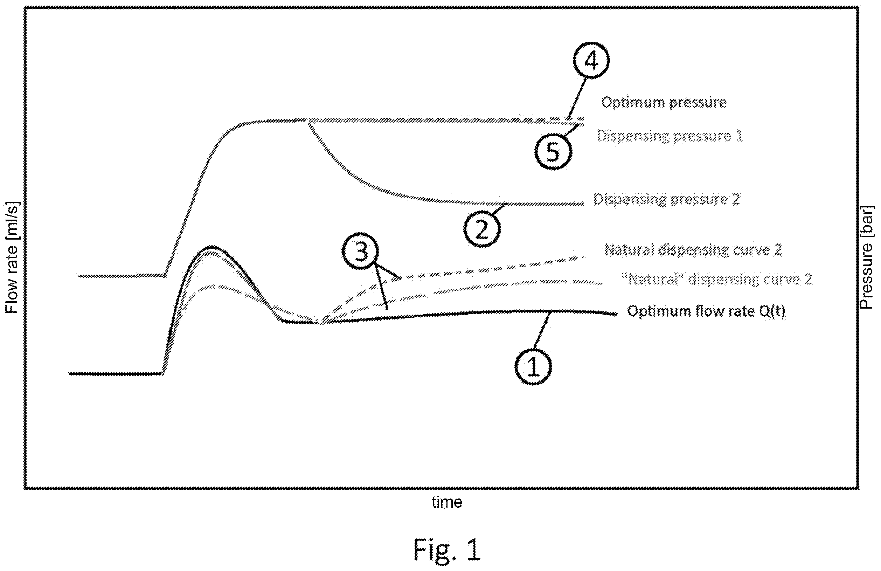

In order to display this phenomenon, Figure 1 exemplarily shows a graph in which they are displayed:
- Curve (1): it is a typical optimum water flow rate curve, defined by the user and which would be replicated by traditional water flow rate regulating systems for all coffees dispensed with that specific predefined characteristic;
- Curve (2): it is the pressure of the water supplied to the brewing assembly in the optimum case Q(t), which would ensure that the coffee extraction reflects the organoleptic requirements;
- Curve (3): it is the "natural" water flow rate that a coffee pad would let through at a constant water pressure, as it occurs in most coffee machines, with a single water pump, at a constant water pressure given by the bypass of the water pump.
- Curve (4): it is the water pressure that would naturally occur if the water flow rate regulation did not intervene.
- Curve (5): it is the resulting water pressure after adjusting the water flow rate.

As it may be appreciated by analysing the graph, the water pressure (Curve (5)) tends to drop considerably at the end of the beverage preparation cycle because the coffee pad is less resistant to the water flow and the water flow rate regulation system is forced to intervene by reducing the water flow rate. Such a beverage preparation cycle, despite having the same water flow rate Q(t) as in the optimum case, results in a water pressure and, hence, in an in-cup beverage being completely different from the desired ones.

The technologies that apply a pure water flow rate control are in fact able to faithfully replicate the flow rate curve Q(t) as in the optimum case, but the water pressure in the various beverage preparations may vary greatly from the optimum condition, because, as said, the resistance that the coffee pad opposes to the water flow varies in a completely unpredictable manner throughout the beverage preparation cycle and depends not only on the characteristics of the coffee (grinding, compression, blend, etc.) but also on the pressure of the water supplied to the brewing assembly.

In conclusion, in order to maintain the water flow rate Q(t) at a set value, the regulation of the water flow rate inevitably affects the pressure of the water supplied to the brewing assembly, with the effect of compromising the repeatability of the in-cup beverages.

Therefore, the Applicant has experienced that it is preferable to work with a fixed water pressure, without any kind of water pressure regulation, to ensure an in-cup beverages as close as possible to the optimum case, rather than perfectly replicating a water flow curve Q(t), completely losing control over the water pressure. In fact, traditional professional coffee machines without any regulation system, neither for water pressure nor water flow rate, are able to maintain a good repeatability of the in-cup beverages with a certain tolerance due to the many variables involved, because constructively, i.e., with the bypass of the water pump, they eliminate, keeping it almost constant, the variable represented by the water pressure, which is very important for the in-cup result.

In addition, in recent years it has been observed that the market is moving towards solutions that allow the user to customise the beverages dispensed, towards a greater flexibility intended to enhance certain coffee characteristics or to hide any possible defects. Customising the dispensed beverages requires the ability to control physical quantities that can be measured while the coffee is prepared, such as water pressure, temperature and flow rate.

With regard to the control of the water flow rate, the main problem is, as mentioned above, that the control of the water flow rate alone cannot guarantee the repeatability of the coffee extraction, since the total loss of control over the water pressure supplied to the brewing assembly leads to extremely variable in-cup results. The need to make the user even able to customise the reference profile of the water flow rate that the regulation system has to reproduce, so as to be able to generate different reference profiles of the water flow rate Q₁(t), Q₂(t)... Qₙ(t), can lead to completely uncontrollable in-cup results, thus departing from the main market requirements: customisation and repeatability.

DFC technology intends to solve the problem of customisation and repeatability by giving the user a limited number of parameters to intervene on, and controlling the water flow rate dynamically, adapting the water flow rate profile to the conditions of the coffee pad. In fact, DFC technology does not define a correct water flow rate (which in fact does not exist, given the countless variables involved), but rather defines the extraction mode.

In fact, DFC technology gives the user the possibility to prepare the beverage according to predefined criteria, leaving the user free to modify the characteristics thereof and to choose whether or not to keep the water flow rate constant at specific beverage preparation steps. In this way, the system can be adapted to the variables involved and, in case it was required to maintain the water flow rate constant, this would not be predefined by the user, since, as seen, there is no such thing as a perfect water flow rate, but would be calculated by the system at a particular moment in time when the beverage is being prepared.

In traditional professional coffee machines, disregarding the pre-brewing and water pressure variables and being the hydraulic characteristics of the water supply circuit invariable, the water flow rate is determined exclusively by the conditions of the coffee pad in the filter holder. It can be stated that a traditional professional coffee machine has only one way of extracting coffee: at fixed pre-brewing, in terms of both duration and water flow rate, and at a constant water pressure.

DFC technology belongs to this category, but with the possibility of modifying the way the beverage is prepared, acting in the three main steps thereof: pre-brewing, pressurisation, brewing.

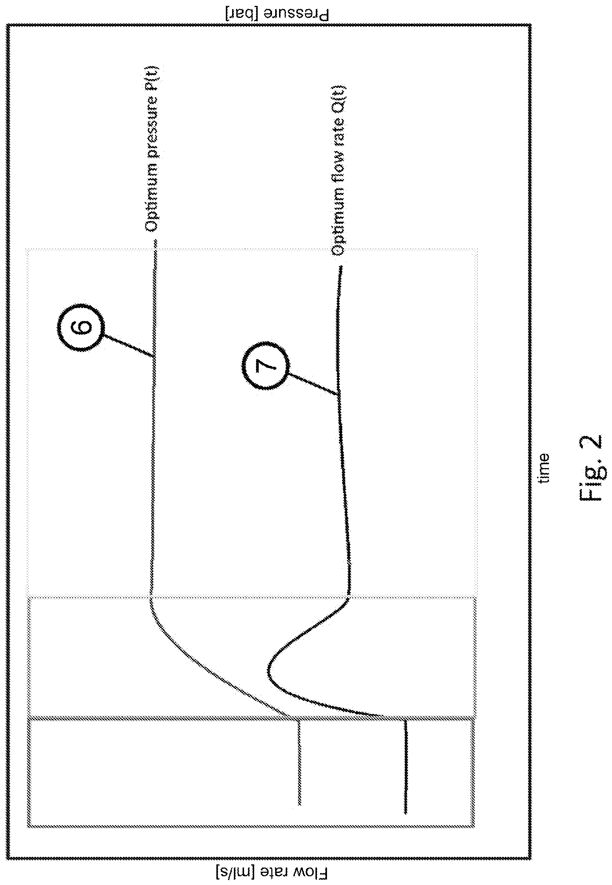

Figure 2 shows the typical time profiles of water pressure (Curve (6)) and water flow rate (Curve (7)) in a traditional professional coffee machine.

In Figure 2 the three main beverage preparation steps are further identified with frames:
- Pre-brewing (left-hand frame): the water supplied to the filter holder percolates at a low pressure from the shower head and begins to wet the upper layers of the pad. The water flow rate is almost constant and depends exclusively on the hydraulic characteristics of the water supply circuit;
- Pressurisation (central frame): the water has filled the space between the coffee pad and the shower head and finds resistance in the coffee pad, which in the meantime is getting wet and swollen inside the filter holder. The water pressure in the brewing chamber increases and the water flow rate reaches a maximum peak, then starts to drop when the volume between the shower head and the filter holder is completely saturated with the brewed beverage. The water flow rate then reaches a minimum level (fully saturated brewing chamber, carbon dioxide emission and cream formation) and the water pressure reaches the maximum levels. From now on, the beverage comes out of the filter holder and is dispensed into the cup. In a traditional espresso coffee machine the water pump works at a fixed pressure and pressurisation always occurs at the same rate;
- Brewing (right-hand frame): the coffee flows out of the spouts of the filter holder and into the cup; the water flow rate increases slightly after reaching the minimum level that identifies the completion of pressurisation; the coffee pad tends to wear out, changing the resistance that opposes to the water flow, until the end of the beverage preparation process. In traditional espresso coffee machines, the water pressure is constant while the water flow rate only depends on the conditions, at that time, of the wet coffee pad.

The DFC technology allows the three beverage preparation steps to be modified by acting on a few parameters typical of the three steps:
- Pre-Brewing:
   J Initial wetting flow
   ✔ Duration
- Pressurisation:
   ✔ Pressurisation rate (gradient of the pressurisation ramp)
- Brewing:
   ✔ Stabilised flow rate brewing
   ✔ Free flow rate brewing

Once the beverage preparation mode has been defined, determined by the combination of user-modifiable parameters, and the water pressure has been set via the bypass of the water pump, the in-cup beverage will have a repeatability at all similar to that of traditional espresso coffee machines.

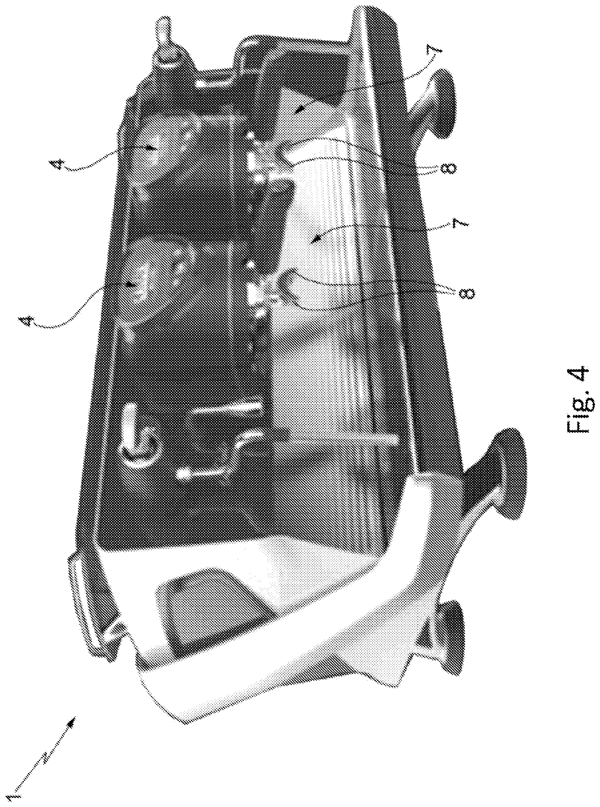

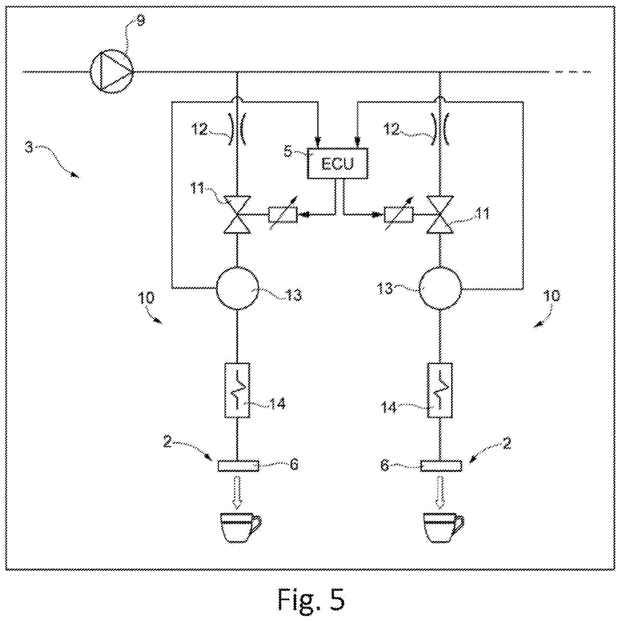

The three above-mentioned beverage preparation steps are discussed hereinafter in detail with reference to the professional espresso coffee machine shown in Figure 4 and a block diagram of which is shown in Figure 5.

As shown in Figures 4 and 5, the professional espresso coffee machine, referenced as a whole by reference numeral **1,** comprises:
- one or more brewing assemblies **2** configured to carry out the same brewing process to brew a brewing substance, in the example considered in the form of coffee powder, with a brewing liquid, in example considered in the form of pressurised hot water, so as to produce one and the same coffee-based beverage, in the example considered in the form of an espresso coffee, in either identical or different amounts, for example strong or long espresso coffees, starting from coffee powder of either one and the same or different type in terms of coffee species (arabica, robusta), coffee blend, coffee granulometry, process to which the coffee was subject, for example decaffeinated, flavoured, etc.;
- a water supply circuit **3** to supply to the brewing assemblies **2** pressurised hot water necessary for preparing espresso coffee;
- a user interface **4** for each brewing assembly **2** to allow beverages to be user-selectable; and
- an electronic control unit **5** to control the operation of the professional espresso machine **1** in response to beverage user-selections.

Each brewing assembly **2** comprises:
- a pressurised hot water dispenser **6** in the form of a shower head or a sprinkler, and
- a filter-holder **7** with one or more espresso coffee dispensing nozzles **8** and adapted to contain, in use, coffee powder to be brewed with pressurised hot water to prepare espresso coffee and to be manually coupleable, in use, to the pressurised hot water dispenser **6** to receive pressurised hot water therefrom.

The water supply circuit **3** comprises:
- a water pump **9,** conveniently an electric variable-speed pump, and in the nonlimiting example considered common to all the brewing assemblies **2,** which may be supplied with cold water from a cold water source (not shown), which may be alternatively the public water mains or a water tank which may be housed either inside or outside, and fluidly connected to, the professional espresso coffee machine **1** and fluidly connected to the public water mains to receive cold water therefrom, and which is operable to supply pressurised cold water, and
- a water supply branch **10** for each brewing assembly **2,** arranged downstream of the water pump **9** and fluidly connected between the delivery of the water pump **9** and the respective brewing assembly **2** to supply pressurised hot water to the respective brewing assembly **2.**

Optionally, the water supply circuit **3** may comprise a water pre-heater (not shown), conveniently a continuous-flow pre-heater, arranged downstream of the water pump **9,** between the latter and the water supply branches **10,** to pre-heat the water supplied to the latter.

Each water supply branch **10** comprises, in sequence, in the direction of the water flow from the water pump **9** to the respective brewing assembly **2:**
- a water flow rate regulation solenoid valve **11,** and, optionally, a giggleur **12** arranged upstream of the water flow rate regulation solenoid valve **11,** to regulate the water flow rate in the water supply branch **10;** and
- a water flow meter **13** to measure, and output an electrical output indicative of, the amount of water, measured in volume, supplied to the water supply branch **10;** and
- a water heater **14** to (further) heat the water in the water supply branch **10.**

In a preferred embodiment, the water flow rate regulation solenoid valves **11** are motorised solenoid valves with electric stepper motors to allow the water flow rate to be discretely regulated.

In a different embodiment, the water flow rate regulation solenoid valves **11** are motorised solenoid valves with electric linear motors to allow the water flow rate to be substantially continuously regulated.

The electronic control unit **5** is electrically connected to the water flow meters **13** to receive therefrom electrical signals indicative of the water flow rates in the respective water inlet branches **10,** to the user interfaces **4** to receive therefrom electrical signals indicative of the beverage selections, and to the water pump **9,** to the water flow rate regulating solenoid valves **11,** to the water heaters **14** and to the water pre-heater, if provided, to provide electrical control signals thereto.

The electronic control unit **5** is programmed to:
- store functional data required to control each water flow rate regulating solenoid valve **11** during a beverage preparation cycle and such as to allow occurrence of one or different predefined characteristics of the water flow rate supplied to the respective brewing assembly **2** during a beverage preparation cycle to be determined;
- control each water flow rate regulating solenoid valve **11** during a beverage preparation cycle based on the stored functional data and on the electric output of the relevant water flow meter **13** so as to carry out a step of pre-brewing with water the brewing substance in the brewing chamber, followed by a step of pressurising the brewing chamber and a subsequent step of brewing with water the brewing substance in the brewing chamber.

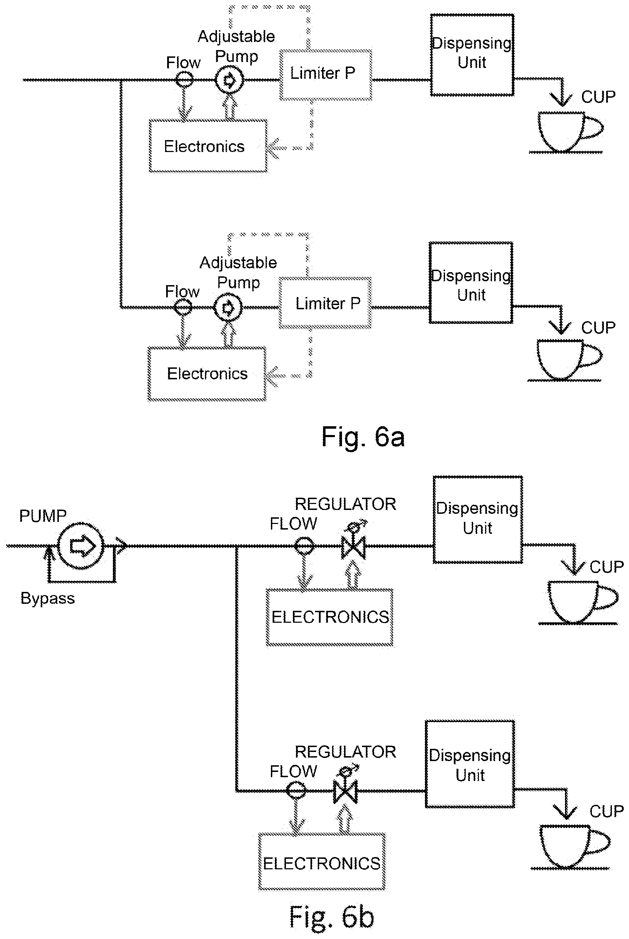

In a different embodiment, the professional espresso coffee machine shown in Figure 4 could have a different water flow rate regulation architecture or system, a simplified block diagram of which is shown in Figure 6a. In order to allow comparison with Figure 5, Figure 6b also shows the water flow rate regulation architecture shown in Figure 5, but in the same simplified form as in Figure 6a.

As it may be appreciated, in the water flow rate regulation architecture shown in Figures 5 and 6b, a single water pump is provided that is common to all the brewing assemblies, with a delivery pressure stabilised by the bypass circuit, as in the traditional coffee machines, and a water flow meter and a traditional motorised proportional solenoid valve on each water supply branch that modifies the water flow section, increasing the localised pressure drops and consequently varying the water flow rate.

In the water flow rate regulation architecture shown in Figure 6a, a water pump is provided for each brewing assembly and in which the water flow rate is regulated by adjusting the rotation speed of the water pump. When using a gear-driven water pump, for example, by varying the rotation speed of the drive motor, the delivery pressure, and hence the water flow rate, may be increased or decreased. In this case, even if the upstream pressure was not stabilised by means of the bypass circuit, direct or indirect methods would be used to check the working point of the water pump, so as to keep the water dispensing pressure within an expected water dispensing pressure range.

Returning to the three above-mentioned beverage preparation steps, they will be analysed hereinafter in detail with reference to the water flow rate regulation architecture shown in Figure 6b, it being clear that this is also valid, *mutatis mutandis,* for the water flow rate regulation architecture shown in Figure 6a.

### 1. Pre-brewing

During the pre-brewing step, the electronic control unit **5** is programmed to closed-loop control the flow rate of the water supplied to each brewing assembly **2** by appropriately controlling, conveniently by means of PID (Proportional-Integral-Derivative) control techniques, the relative water flow rate regulation solenoid valve **11** based on the electric output of the relative water flow meter **13,** so as to result in the water flow rate regulation solenoid valve **11** introducing a localised pressure drop such as to reduce the water flow rate to the desired values.

In particular, the electronic control unit **5** is programmed to allow an operator to set the flow rate of water to be supplied to each brewing assembly **2** and the duration of each pre-brewing step, during which the water then outflows from the shower head at an extremely limited flow rate compared to that which would be allowed by the hydraulic conditions. Failing to encounter any resistance of the coffee pad, without the aid of a pre-brewing chamber as in traditional espresso coffee machines, the water comes out at an atmospheric pressure and the water flow rate is determined solely by the pressure drop in the hydraulic circuit, the pressure of the water supplied by the water pump **9** being almost constant.

The electronic control unit **5** is further programmed to closed-loop control the flow rate of the water supplied to each brewing assembly **2** by following a target water flow rate profile indicative of the time course of the water flow rate Q(t) desired to be supplied to the brewing assembly **2** during the pre-brewing step in a coffee preparation cycle.

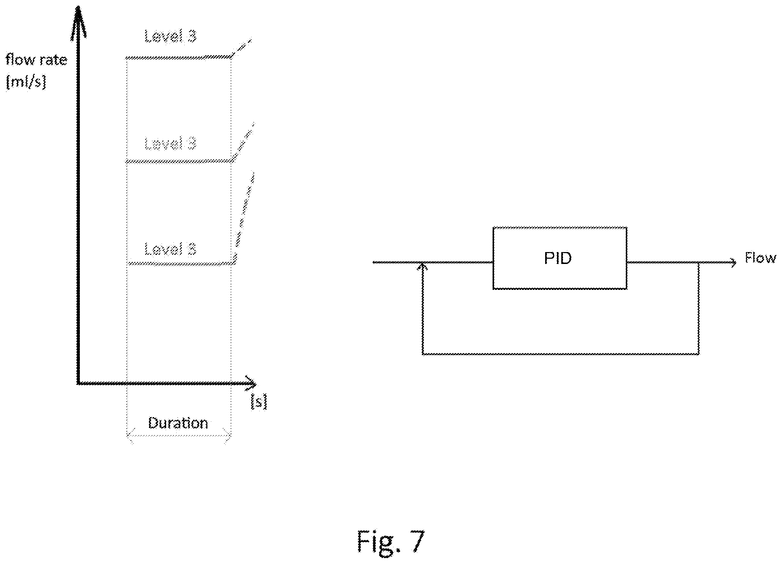

The electronic control unit **5** is further programmed to allow an operator to program, for each brewing assembly **2,** a pre-brewing water flow rate profile and a pre-brewing duration. Conveniently, but not necessarily, to make programming of the pre-brewing step simple, the electronic control unit **5** is programmed to allow an operator to select the pre-brewing water flow rate and the pre-brewing duration from different, for example three, constant pre-brewing water flow rates and pre-brewing durations stored in the electronic control unit **5,** as shown in Figure 7.

### 2. Pressurisation

As previously mentioned, at this step the water has already encountered the coffee pad and the filling of the brewing chamber (shower head and filter holder) must be completed. The operator can choose how quickly the water pressure must be taken in the brewing chamber from the minimum levels assumed in the pre-brewing step (close to the atmospheric pressure) to the maximum supply pressure from the water pump.

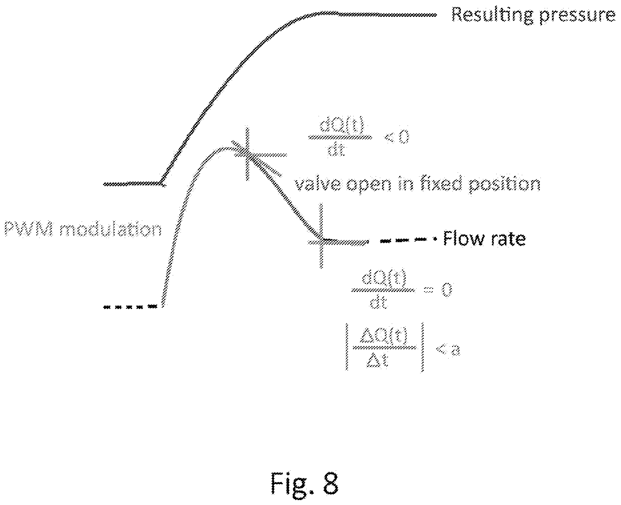

The electronic control unit **5** is therefore programmed to open-loop control each water flow rate regulation solenoid valve **11** to achieve the pressurisation profile shown in Figure 8, i.e., without any closed-loop control of the water flow rate.

During the pressurisation step of the brewing chamber, the electronic control unit 5 is programmed to constantly monitor the water flow rate based on the electrical output of the respective water flow meter **13** and to determine when it assumes one or different predefined characteristics indicative of a suitable filling of the brewing chamber with water.

The electronic control unit **5** is programmed to determine that the water flow rate assumes one or more of the following predefined characteristics: has or is close to a maximum value, it begins to decrease after assuming a maximum value, and its derivative is within a predefined range.

To achieve this, the electronic control unit **5** is programmed to compute the variation in time (discrete time derivative) of the water flow rate and to determine when the variation in the water flow rate becomes essentially zero or is within a certain variation range, e.g., is below a predefined variation threshold (± 0.2 ml/sec).

When the water flow rate assumes one or more of the above-escribed predefined characteristics, this means that the brewing chamber is completely filled and the water is passing through the filter holes, which introduce a further and significant pressure drop, so resulting in the water flow rate beginning to drop dramatically and, therefore, the pressurisation step of the brewing chamber ends.

For ease of implementation, the electronic control unit **5** is programmed to control each water flow rate regulation solenoid valve **11** in a PWM (Pulse Width Modulation) mode, which, as known, causes the water flow rate regulation solenoid valve **11** to alternatingly close and open over time until the maximum water flow rate is reached, from which, until the end of the pressurisation step, the water flow rate regulation solenoid valve **11** is kept constantly open at a predetermined water flow section, suitably the one assumed when the water flow rate assumes the above-mentioned one or different characteristics, so as to allow the water flow meter **13** to define, without disturbances (the PWM pulsations introduce reading errors), the water flow rate to be used during the brewing step.

During the pre-brewing step in which the water flow rate regulation solenoid valve **11** is kept constantly open at said predetermined water flow section, i.e., with closed-loop controlling water flow section, the water flow rate evolves due to the hydraulic resistance variation opposed by the brewing substance in the brewing chamber to the water flow.

In a different embodiment, the electronic control unit **5** may be programmed to control each water flow rate regulation solenoid valve **11,** rather than in a PWM mode, by means of different controls, such as gradual openings according to otherwise defined and more or less sophisticated curves, which always have the purpose of pressurising the brewing chamber more or less quickly, giving the operator the possibility of choosing between different possibilities.

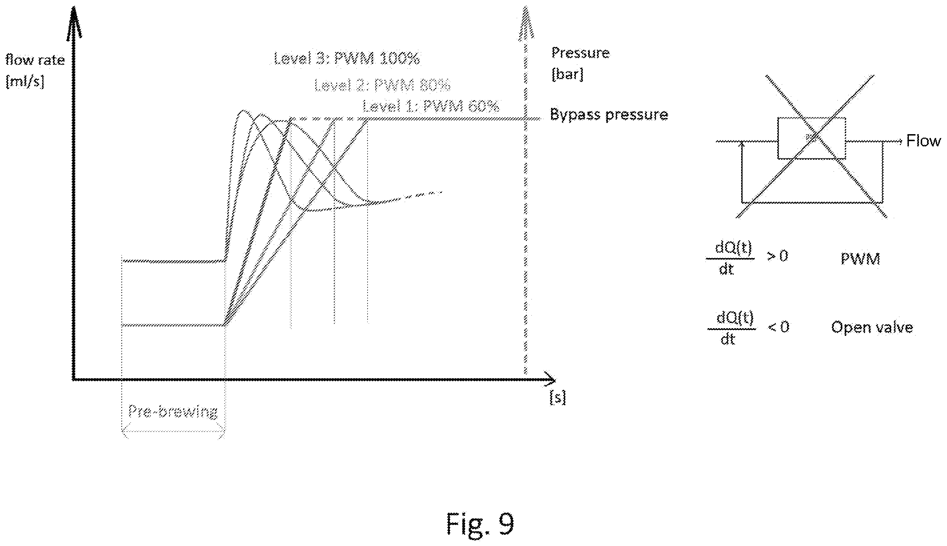

For this purpose, the electronic control unit **5** is programmed to allow an operator to program, for each brewing assembly **2,** a profile of pressurisation of the brewing chamber. Conveniently, but not necessarily, in order to make programming of the pressurisation step simple, the electronic control unit **5** is programmed to allow an operator to select from three levels of PWMs in the initial ramp step (growth of the water flow rate), as shown in Figure 9, wherein the water flow section of the water flow rate regulation solenoid valve **11** that is maintained at the end of the pressurisation step is conveniently the same at all three levels.

As it may be appreciated in Figure 9, the water pressure curves are approximated by straight lines. The different curves show how pressurisation after pre-brewing occurs with ramps having a gradient as greater as the PWM level attributed to the three different levels is higher. The resulting water flow rates for the three PWM levels represent; clearly that the faster the brewing chamber is pressurised, the faster the water flow rate reaches its maximum level.

### 3. Brewing

The two above-described beverage preparation steps, i.e., pre-brewing and pressurisation, may be defined as preparatory steps, as the coffee pad is wetted and pressurised prior to the actual beverage preparation and dispensing into the cup. In traditional espresso coffee machines, this last beverage preparation step, known as brewing, generally occurs at constant water pressure, while the resulting water flow rate depends on how the coffee pad was prepared in the previous steps and on the pressure of the water pump.

Therefore, the electronic control unit **5** is programmed to allow an operator to customise the brewing step by choosing between different brewing modes, conveniently, but not limited to, the following two hereinafter described.

### 3.1 Constant Water Pressure Brewing

This brewing mode is at all similar, for the brewing step only, to a traditional brewing, with the water pump operated to dispense water at a constant pressure defined by the bypass circuit thereof. The water flow rate is left free to evolve and there is no intervention by the water flow rate regulation solenoid valve **11,** which remains open at a predetermined water flow section.

### 3.2 Controlled Water Flow Rate Brewing

At the end of the pressurisation step, as said, the flow rate regulation solenoid valve **11** is kept open at a predetermined water flow section. Taking into consideration the espresso coffee, as seen above, there is usually a minimum water flow rate when the water has completely filled the filter and the coffee releases a lot of carbon dioxide, forming the foam. Subsequently, the coffee pad begins to lose consistency as the water removes fats, proteins and all the substances that will make up the beverage in the cup. Generally there is a slight tendency for the water flow rate to increase (more noticeable in the case of more recently roasted coffees, less noticeable with very mature or old coffees).

Therefore, the electronic control unit **5** is programmed to allow an operator to choose this brewing mode, wherein the brewing is completed with a water flow rate that has stabilised due to a progressive and gradual closure of the water flow rate regulating solenoid valve **11.** From the water flow section assumed at the end of the pressurisation step, the water flow rate regulating solenoid valve **11** is open-loop controlled so as to cause it to perform slow closing movements, as long as the water flow rate is increasing, so as to oppose the natural tendency of the water flow rate to increase: in fact, the more the water flow rate regulation solenoid valve **11** is closed, the more it acts as a brake, introducing load losses that tend to slow down the water flow.

Therefore, also during the brewing step, the electronic control unit **5** is programmed to constantly monitor the water flow rate based on the electrical output of a flow meter **13** and to determine when the water flow rate assumes one or different predefined characteristics indicative of a stabilised water flow rate, in particular the variation over time (discrete time derivative) of the water flow rate becomes substantially zero or is within a certain variation range, for example is below a certain variation threshold (± 0.2 ml/sec).

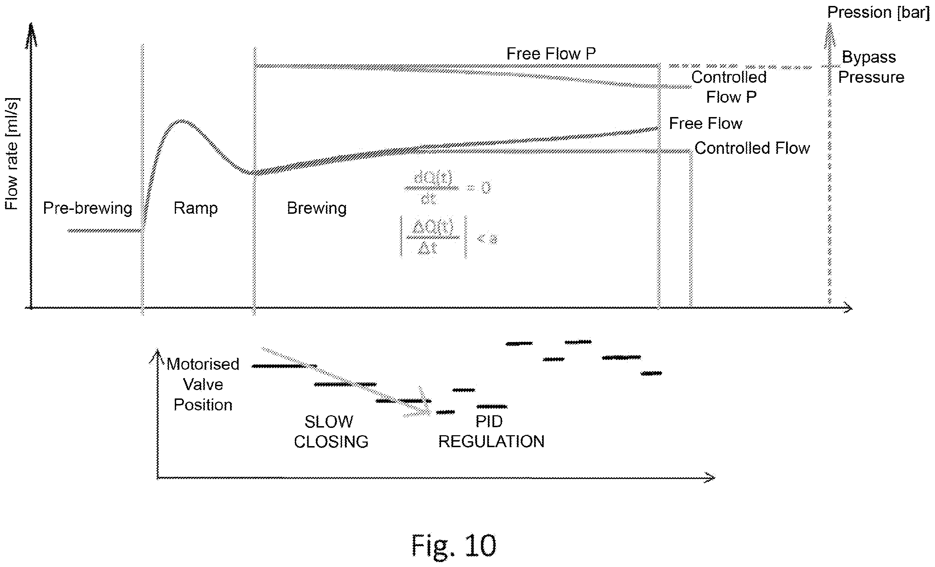

When the water flow rate assumes the one or different conditions indicated above, in particular it has steadied at a certain value, the electronic control unit **5** is programmed to start closed-loop controlling the water flow rate by means of PID regulation techniques so as to try to maintain the last value assumed, as shown in Figure 10.

Substantially, therefore, since the coffee pads of compressed coffee are always different from each other, the water flow rate that is steadied by the movements of the water flow regulation solenoid valve **11** will always be different, but will be equal to that which was steadied in the first part of the brewing step, when the best parts of the coffee are extracted.

As conceived, with the DFC technology the pressure of the water supplied to each brewing assembly **2** will be, for most part of the brewing step, at a water pressure defined by the bypass circuit of the water pump **9** and will tend to drop slightly during brewing. Preparing a coffee with water at a decreasing pressure rather than at a fixed pressure and with a controlled flow rate can lead to changes in the in-cup beverage, for example increasing sweetness and reducing bitter and astringent notes, which in traditional espresso coffee machines can be due to over-extraction of the coffee during the last part of the brewing step with constant water pressure.

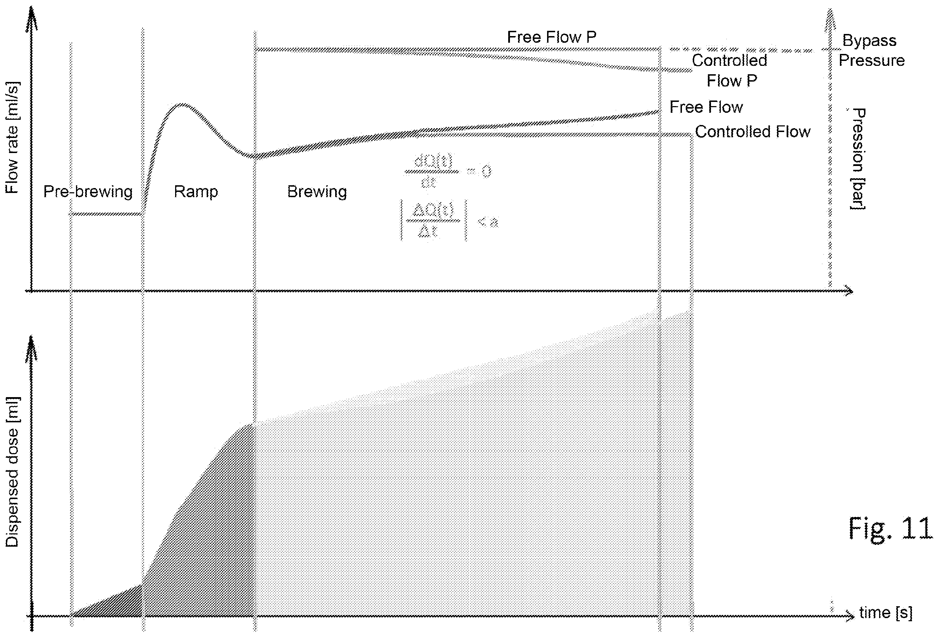

Finally, since an operator unfamiliar with the traces of the water flow rate curves Q(t) may find it very difficult to obtain useful information from reading such curves, the electronic control unit **5** is programmed to cause a graph of an amount of water supplied to the brewing assembly **2** shown in Figure 11 to be displayed on the user interface **4** of each brewing assembly **2** during the beverage preparation, wherein the gradient with which the amount of water increases in the three beverage preparation steps described above (the amount of water is always cumulatively increasing) can be easily controlled by the operator, and wherein the three beverage preparation steps described above are identified with different curves: (PB) for Pre-Brewing, (PR) for Pressurisation and (BR) for Brewing.

Based on what has been described, the advantages that the DFC technology allows to achieve may be appreciated.

As mentioned at the outset, in fact, the main demand by the market is to be able to customise the preparation of coffee, while maintaining the repeatability of the in-cup beverage. In other words, a certain beverage preparation profile, meaning the water pressure profile or the water flow rate profile or, more generally, the profile of a quantity involved in the beverage preparation process which, when controlled, succeeds in enduring certain in-cup results, must enhance certain characteristics of the coffee served and these characteristics must be present in practically all coffees made with that particular profile.

The DFC technology, with just a few parameters that may be changed by the operator, allows the beverage preparation mode to be selected, ensuring flexibility and repeatability.

In particular, like in traditional espresso coffee machines, the bypass pressure of the water pump is the fixed reference also in the DFC technology, but unlike traditional espresso coffee machines, the DFC technology allows to flexibly and repeatably customise how the bypass pressure is reached in the brewing chamber and how the coffee preparation ends. In fact, once the bypass pressure of the water pump has been set, during the entire coffee preparation, the control system is completely independent of the water pressure, which is not monitored in any way as no pressure transducer is installed.

Finally, in the DFC technology, the pressure of the water supplied to each brewing assembly is slightly reduced during brewing, thus increasing the sweetness of the coffee and reducing bitter and astringent notes, which in traditional machines are caused by over-extraction of the coffee in the latter part of the brewing step at a constant water pressure.

## Claims

1. A beverage preparation machine **(1)** comprising:
- at least a brewing assembly **(2)** to produce a beverage by brewing a brewing substance with a brewing liquid;
- a brewing liquid supply circuit **(3)** to supply a brewing liquid to the brewing assembly **(2);** and
- an electronic control unit **(5)** to control operation of the beverage preparation machine **(1);**
the brewing assembly **(2)** comprises:
- a brewing liquid dispenser **(6)** to dispense a brewing liquid; and
- a filter holder **(7)** with one or more beverage dispensing nozzles **(8),** internally defining a brewing chamber fillable with a brewing substance to be brewed with the brewing liquid to prepare the beverage, and manually coupleable to the brewing liquid dispenser **(6)** to receive the brewing liquid therefrom;
the brewing liquid supply circuit **(3)** comprises:
- a brewing liquid flow rate regulation system **(11)** to regulate a flow rate of a brewing liquid supplied to the brewing assembly **(2);** and
- a brewing liquid flow meter **(13)** to measure, and output an electrical output indicative of, a quantity indicative of an amount of brewing liquid supplied to the brewing assembly **(2);**
the electronic control unit (5) is designed to communicate with the brewing liquid flow meter **(13)** to receive the electrical output thereof, and with the brewing liquid flow rate regulation system **(11)** to provide an electrical command thereto;
the electronic control unit **(5)** is further designed to:
- store functional data required to control the brewing liquid flow rate regulation system **(11)** during a beverage preparation cycle and such as to allow the existence of one or different predefined characteristics of the brewing liquid flow rate supplied to the brewing assembly **(2)** during a beverage preparation cycle to be determined; and
- control the brewing liquid flow rate regulation system **(11)** during a beverage preparation cycle based on the stored functional data and on the electric output of the brewing liquid flow meter **(13)** so as to carry out a step of pre-brewing the brewing substance in the brewing chamber with the brewing liquid, followed by a step of pressurising the brewing chamber and a subsequent step of brewing the brewing substance in the brewing chamber with the brewing liquid;
wherein the electronic control unit **(5)** is further designed to carry out the step of pressurising the brewing chamber by:
- controlling the brewing liquid flow rate regulation system **(11)** so as to cause the brewing liquid flow rate supplied to the brewing assembly **(2)** to increase; said beverage preparation machine being **characterised in that** the electronic control unit (5) is further designed to carry out the step of pressurising the brewing chamber by:
- determining, based on the electric output of the brewing liquid flow meter **(13),** whether the brewing liquid flow rate supplied to the brewing assembly **(2)** assumes one or different first predefined characteristics indicative of the existence of a condition of proper filling of the brewing chamber with the brewing liquid; and
- when it is determined that the flow rate of the brewing liquid supplied to the brewing assembly **(2)** assumes the one or different first predefined characteristics, keeping the brewing liquid flow rate regulation system **(11)** in a predefined steady operating state.

2. The beverage preparation machine **(1)** of claim **1,** wherein the electronic control unit **(5)** is further designed to cause the brewing liquid flow rate supplied to the brewing assembly **(2)** to increase during the step of pressurising the brewing chamber by open-loop controlling the brewing liquid flow rate regulation system **(11).**

3. The beverage preparation machine **(1)** of claim **1** or **2,** wherein the one or different first predefined characteristics are defined by the brewing liquid flow rate supplied to the brewing assembly **(2)** assuming one or more of the following characteristics: assuming or being close to a maximum value, starting decreasing after having assumed a maximum value, and its derivative being within a predefined range.

4. The beverage preparation machine **(1)** of any one of the preceding claims, wherein the electronic control unit **(5)** is further designed to:
- determine, based on the electric output of the brewing liquid flow meter **(13),** whether the brewing liquid flow rate supplied to the brewing assembly **(2)** assumes one or different second predefined characteristics indicative of the existence of an appropriate condition to start the step of brewing the brewing substance in the brewing chamber with the brewing liquid; and
- when it is determined that the brewing liquid flow rate supplied to the brewing assembly **(2)** assumes the one or different second predefined characteristics, control the brewing liquid flow rate regulation system **(11)** so as to start the step of brewing the brewing substance in the brewing chamber with the brewing liquid.

5. The beverage preparation machine **(1)** of claim **4,** wherein the one or different second predefined characteristics are defined by the brewing liquid flow rate supplied to the brewing assembly **(2)** assuming, being close to, or starting steadying at a minimum value during a decrease after reaching a maximum value.

6. The beverage preparation machine **(1)** of any one of the preceding claims, wherein the electronic control unit **(5)** is further designed to carry out the step of brewing the brewing substance in the brewing chamber with the brewing liquid by implementing a controlled brewing liquid flow rate brewing mode comprising:
- controlling the brewing liquid flow rate regulation system **(11)** to oppose a natural tendency of the brewing liquid flow rate supplied to the brewing assembly **(2)** to increase;
- determining, based on the electric output of the brewing liquid flow meter **(13),** whether the brewing liquid flow rate supplied to the brewing assembly **(2)** assumes one or different third predefined characteristics indicative of the brewing liquid flow rate supplied to the brewing assembly **(2)** having been substantially steadied;
- when it is determined that the flow rate of the brewing liquid supplied to the brewing assembly **(2)** assumes the one or more third predefined characteristics, closed-loop controlling the brewing liquid flow rate regulation system **(11)** based on the electric output of the brewing liquid flow meter **(13)** so as to keep the steadied brewing liquid flow rate supplied to the brewing assembly **(2).**

7. The beverage preparation machine **(1)** of claim **6,** wherein the electronic control unit **(5)** is further designed to oppose the natural tendency of the flow rate of the brewing liquid supplied to the brewing assembly **(2)** to increase during the step of brewing the brewing substance in the brewing chamber with the brewing liquid by open-loop controlling the brewing liquid flow rate regulation system **(11).**

8. The beverage preparation machine **(1)** of claim **6** or **7,** wherein the one or different third predefined characteristics are defined by a variation of the brewing liquid flow rate supplied to the brewing assembly **(2)** being within a predefined range.

9. The beverage preparation machine **(1)** of any one of claims **6** to **8,** wherein the electronic control unit **(5)** is further designed to allow the step of brewing the brewing substance to be user-customizable by selecting between the aforementioned controlled brewing liquid flow rate brewing mode and a constant brewing liquid pressure brewing mode.

10. The beverage preparation machine **(1)** of any one of the preceding claims, wherein the brewing liquid flow rate regulation system **(11)** comprises an electronically-controllable flow rate regulation solenoid valve **(11)** or an electronically-controllable variable-speed supply pump **(9).**

## Patentansprüche

1. Eine Getränkezubereitungsmaschine (1), die Folgendes aufweist:
- mindestens eine Brühgruppe (2) zur Herstellung eines Getränks durch Aufbrühen einer Brühsubstanz mit einer Brühflüssigkeit;
- einen Brühflüssigkeitsversorgungskreislauf (3) zum Versorgen einer Brühanordnung (2) mit Brühflüssigkeit; und
- eine elektronische Steuereinheit (5) zur Steuerung des Betriebs der Getränkezubereitungsmaschine (1);
wobei die Brühgruppe (2) Folgendes aufweist:
- einen Brühflüssigkeits-Ausgabevorrichtung (6) zum Ausgeben einer Brühflüssigkeit; und
- einen Filterhalter (7) mit einer oder mehreren Getränkeausgabedüsen (8), die im Inneren eine Brühkammer definieren, die mit einer Brühsubstanz gefüllt werden kann, die mit der Brühflüssigkeit aufgebrüht werden soll, um das Getränk zuzubereiten, und die manuell mit dem der Brühflüssigkeits-Ausgabevorrichtung (6) gekoppelt werden kann, um die Brühflüssigkeit von dieser zu erhalten;
wobei der Brühflüssigkeitsversorgungskreislauf (3) Folgendes aufweist:
- ein System (11) zur Regulierung der Durchflussmenge einer Brühflüssigkeit, um einen Durchfluss einer Brühflüssigkeit zu regeln, mit der die Brühgruppe (2) versorgt wird; und
- einen Brühflüssigkeits-Durchflussmesser (13) zum Messen einer Quantität, und Ausgeben eines elektrischen Ausgangssignals, das diese anzeigt, die eine Menge an Brühflüssigkeit anzeigt, mit der die Brühgruppe (2) versorgt wird;
wobei die elektronische Steuereinheit (5) so ausgelegt ist, dass sie mit dem Brühflüssigkeits-Durchflussmesser (13) kommuniziert, um dessen elektrische Ausgabe zu empfangen, und mit dem System (11) zur Regelung der Durchflussmenge von Brühflüssigkeit, um diesem einen elektrischen Befehl zur Verfügung zu stellen;
wobei die elektronische Steuereinheit (5) ist ferner so ausgelegt, zum:
- Speichern von Funktionsdaten, die erforderlich sind, um das System (11) zur Regelung der Durchflussmenge von Brühflüssigkeit während eines Getränkezubereitungszyklus zu steuern, und zwar derart, dass es möglich wird, das Vorhandensein einer oder verschiedener vordefinierter Charakteristika der Durchflussmenge von Brühflüssigkeit, mit der die Brühgruppe (2) während eines Getränkezubereitungszyklus versorgt wird, zu bestimmen; und
- Steuern des Systems (11) zur Regelung der Durchflussmenge von Brühflüssigkeit während eines Getränkezubereitungszyklus auf Grundlage der gespeicherten Funktionsdaten und des elektrischen Ausgangs des Brühflüssigkeits-Durchflussmessers (13), dass ein Schritt des Vorbrühens der Brühsubstanz in der Brühkammer mit der Brühflüssigkeit, gefolgt von einem Schritt der Druckbeaufschlagung der Brühkammer und einem nachfolgenden Schritt des Aufbrühens der Brühsubstanz in der Brühkammer mit der Brühflüssigkeit ausgeführt wird;
wobei die elektronische Steuereinheit (5) ferner dazu ausgelegt ist, den Schritt der Druckbeaufschlagung der Brühkammer durchzuführen mittels:
- Steuern des Systems (11) zur Regelung der Durchflussmenge von Brühflüssigkeit, dass die Durchflussmenge der Brühflüssigkeit, die der Brühgruppe (2) zugeführt wird, erhöht wird;
wobei die Getränkezubereitungsmaschine **dadurch gekennzeichnet ist, dass** die elektronische Steuereinheit (5) ferner so ausgelegt ist, dass sie den Schritt der Druckbeaufschlagung der Brühkammer durchführt mittels:
- Bestimmen, basierend auf dem elektrischen Ausgang des Brühflüssigkeits-Durchflussmessers (13), ob die Brühflüssigkeits-Durchflussrate, die der Brühgruppe (2) zugeführt wird, eine oder verschiedene erste vordefinierte Charakteristika annimmt, die auf das Vorhandensein eines Zustands der ordnungsgemäßen Befüllung der Brühkammer mit der Brühflüssigkeit hinweisen; und
- wenn festgestellt wird, dass die Durchflussmenge der der Brühgruppe (2) zugeführten Brühflüssigkeit die eine oder verschiedene erste vordefinierte Charakteristika annimmt, Halten des Systems (11) zur Regelung der Durchflussmenge der Brühflüssigkeit in einem vordefinierten stabilen Betriebszustand.

2. Die Getränkezubereitungsmaschine (1) nach Anspruch 1, wobei die elektronische Steuereinheit (5) ferner so ausgelegt ist, dass sie bewirkt, dass die der Brühgruppe (2) zugeführte Durchflussmenge von Brühflüssigkeit während des Schritts der Druckbeaufschlagung der Brühkammer erhöht wird, indem sie das System (11) zur Regelung der Durchflussmenge von Brühflüssigkeit im offenen Regelkreis steuert.

3. Die Getränkezubereitungsmaschine (1) nach Anspruch 1 oder 2, wobei die eine oder die verschiedenen ersten vordefinierten Charakteristika dadurch definiert sind, dass die der Brühgruppe (2) zugeführte Durchflussmenge von Brühflüssigkeit eine oder mehrere der folgenden Charakteristika annimmt: sie nimmt einen Maximalwert an oder liegt nahe daran, sie beginnt abzunehmen, nachdem sie einen Maximalwert angenommen hat, und ihre Ableitung liegt innerhalb eines vordefinierten Bereichs.

4. Die Getränkezubereitungsmaschine (1) nach einem der vorhergehenden Ansprüche, wobei die elektronische Steuereinheit (5) ferner ausgelegt ist zum:
- Bestimmen, und zwar auf Grundlage des elektrischen Ausgangs des Brühflüssigkeits-Durchflussmessers (13), ob die der Brühgruppe (2) zugeführte Durchflussmenge von Brühflüssigkeit eine oder verschiedene zweite vordefinierte Charakteristika annimmt, die das Vorhandensein einer geeigneten Bedingung zum Starten des Schritts des Aufbrühens der Brühsubstanz in der Brühkammer mit der Brühflüssigkeit anzeigen; und
- wenn festgestellt wird, dass die der Brühgruppe (2) zugeführte Durchflussmenge von Brühflüssigkeit die eine oder die verschiedenen zweiten vordefinierten Charakteristika annimmt, Steuern des Systems (11) zur Regelung der Durchflussmenge von Brühflüssigkeit, um den Schritt des Aufbrühens der Brühsubstanz in der Brühkammer mit der Brühflüssigkeit zu beginnen.

5. Die Getränkezubereitungsmaschine (1) nach Anspruch 4, wobei die eine oder die verschiedenen zweiten vordefinierten Charakteristika dadurch definiert sind, dass die der Brühgruppe (2) zugeführte Durchflussmenge von Brühflüssigkeit einen Minimalwert annimmt, sich diesem annähert oder beginnt sich bei dieser zu stabilisieren während einer Abnahme nach Erreichen eines Maximalwertes.

6. Die Getränkezubereitungsmaschine (1) nach einem der vorhergehenden Ansprüche, wobei die elektronische Steuereinheit (5) ferner dazu ausgelegt ist, den Schritt des Aufbrühens der Brühsubstanz in der Brühkammer mit der Brühflüssigkeit auszuführen, indem ein Brühmodus mit gesteuerter Durchflussmenge von Brühflüssigkeit implementiert wird, der Folgendes aufweist:
- Steuern des Systems (11) zur Regelung der Durchflussmenge von Brühflüssigkeit, um einer natürlichen Tendenz zur Erhöhung der Durchflussmenge von Brühflüssigkeit, die der Brühgruppe (2) zugeführt wird, entgegenzuwirken;
- Bestimmen, auf Grundlage des elektrischen Ausgangs des Brühflüssigkeits-Durchflussmessers (13), ob die Durchflussmenge von Brühflüssigkeit, die der Brühgruppe (2) zugeführt wird, eine oder verschiedene dritte vordefinierte Charakteristika annimmt, die darauf hinweisen, dass die Durchflussmenge von Brühflüssigkeit, die der Brühgruppe (2) zugeführt wird, im Wesentlichen stabilisiert worden ist;
- wenn festgestellt wird, dass die Durchflussmenge der der Brühgruppe (2) zugeführten Brühflüssigkeit die eine oder die mehreren dritten vordefinierten Charakteristika annimmt, Regeln des Systems (11) zur Regelung der Durchflussmenge von Brühflüssigkeit auf Grundlage des elektrischen Ausgangs des Brühflüssigkeits-Durchflussmessers (13), um die der Brühgruppe (2) zugeführte Durchflussmenge von Brühflüssigkeit konstant zu halten.

7. Die Getränkezubereitungsmaschine (1) nach Anspruch 6, wobei die elektronische Steuereinheit (5) ferner so ausgelegt ist, dass sie der natürlichen Tendenz der Durchflussmenge der der Brühgruppe (2) zugeführten Brühflüssigkeit, während des Schritts des Brühens der Brühsubstanz in der Brühkammer mit der Brühflüssigkeit anzusteigen, entgegenwirkt, indem sie das System (11) zur Regelung der Durchflussmenge von Brühflüssigkeit im offenen Regelkreis steuert.

8. Die Getränkezubereitungsmaschine (1) nach Anspruch 6 oder 7, wobei die eine oder die verschiedenen dritten vordefinierten Charakteristika durch eine Variation der der Brühgruppe (2) zugeführten Durchflussmenge von Brühflüssigkeit innerhalb eines vordefinierten Bereichs definiert sind.

9. Die Getränkezubereitungsmaschine (1) nach einem der Ansprüche 6 bis 8, wobei die elektronische Steuereinheit (5) ferner so ausgelegt ist, dass der Schritt des Aufbrühens der Brühsubstanz vom Benutzer angepasst werden kann, und zwar indem zwischen dem oben erwähnten Aufbrühmodus mit gesteuerter Durchflussmenge von Brühflüssigkeit und einem Aufbrühmodus mit konstantem Brühflüssigkeitsdruck gewählt wird.

10. Die Getränkezubereitungsmaschine (1) nach einem der vorhergehenden Ansprüche, wobei das System (11) zur Regelung der Durchflussmenge von Brühflüssigkeit ein elektronisch steuerbares Magnetventil (11) zur Regelung der Durchflussmenge oder eine elektronisch steuerbare drehzahlvariable Versorgungspumpe (9) aufweist.

## Revendications

1. Machine de préparation de boisson (1) comprenant :
- au moins un ensemble d'infusion (2) pour produire une boisson en infusant une substance d'infusion avec un liquide d'infusion ;
- un circuit d'alimentation en liquide d'infusion (3) pour fournir un liquide d'infusion à l'ensemble d'infusion (2) ; et
- une unité électronique de commande (5) pour commander le fonctionnement de la machine de préparation de boisson (1) ;
l'ensemble d'infusion (2) comprend :
- un distributeur de liquide d'infusion (6) pour distribuer un liquide d'infusion ; et
- un porte-filtre (7) avec une ou plusieurs buses de distribution de boisson (8), définissant, intérieurement, une chambre d'infusion pouvant être remplie avec une substance d'infusion à infuser avec le liquide d'infusion pour préparer la boisson, et pouvant être couplé, manuellement, au distributeur de liquide d'infusion (6) pour recevoir le liquide d'infusion à partir de cette dernière ;
le circuit d'alimentation en liquide d'infusion (3) comprend :
- un système de régulation de débit de liquide d'infusion (11) pour réguler un débit d'un liquide d'infusion amené à l'ensemble d'infusion (2) ; et
- un débitmètre de liquide d'infusion (13) pour mesurer et transmettre une sortie électrique indicative d'une quantité indiquant une quantité de liquide d'infusion fourni à l'ensemble d'infusion (2) ;
l'unité électronique de commande (5) est conçue pour communiquer avec le débitmètre de liquide d'infusion (13) pour recevoir sa sortie électrique, et avec le système de régulation de débit de liquide d'infusion (11) pour fournir une commande électrique à ce dernier ;
l'unité électronique de commande (5) est en outre conçue pour :
- stocker des données fonctionnelles requises pour commander le système de régulation de débit de liquide d'infusion (11) pendant un cycle de préparation de boisson et afin de permettre de déterminer l'existence d'une ou de différentes caractéristiques prédéfinies de débit de liquide d'infusion fournies à l'ensemble d'infusion (2) pendant un cycle de préparation de boisson ; et
- commander le système de régulation de débit de liquide d'infusion (11) pendant un cycle de préparation de boisson sur la base des données fonctionnelles stockées et de la sortie électrique du débitmètre de liquide d'infusion (13) afin de réaliser une étape pour pré-infuser la substance d'infusion dans la chambre d'infusion avec le liquide d'infusion, suivie par une étape pour mettre la chambre d'infusion sous pression et une étape suivante pour infuser la substance d'infusion dans la chambre d'infusion avec le liquide d'infusion ;
dans laquelle l'unité électronique de commande (5) est en outre conçue pour réaliser l'étape pour mettre sous pression la chambre d'infusion avec les étapes suivantes :
- commander le système de régulation de débit de liquide d'infusion (11) pour provoquer l'augmentation du débit de liquide d'infusion fourni à l'ensemble d'infusion (2) ;
ladite machine de préparation de boisson étant **caractérisée en ce que** l'unité électronique de commande (5) est en outre conçue pour réaliser l'étape pour mettre sous pression la chambre d'infusion avec les étapes suivantes :
- déterminer, sur la base de la sortie électrique du débitmètre de liquide d'infusion (13), si le débit de liquide d'infusion fourni à l'ensemble d'infusion (2) adopte une ou différentes premières caractéristiques prédéfinies indiquant l'existence d'une condition de remplissage appropriée de la chambre d'infusion avec le liquide d'infusion ; et
- lorsque l'on détermine que le débit du liquide d'infusion fourni à l'ensemble d'infusion (2) adopte les une ou différentes premières caractéristiques prédéfinies, maintenir le système de régulation de débit de liquide d'infusion (11) dans un état de fonctionnement stable prédéfini.

2. Machine de préparation de boisson (1) selon la revendication 1, dans laquelle l'unité électronique de commande (5) est en outre conçue pour provoquer l'augmentation du débit de liquide d'infusion fourni à l'ensemble d'infusion (2) pendant l'étape pour mettre la chambre d'infusion sous pression en commandant en boucle ouverte le système de régulation de débit de liquide d'infusion (11).

3. Machine de préparation de boisson (1) selon la revendication 1 ou 2, dans laquelle une ou différentes premières caractéristiques prédéfinies sont définies par le fait que le débit de liquide d'infusion fourni à l'ensemble d'infusion (2) adopte une ou plusieurs des caractéristiques suivantes : adopter ou être proche d'une valeur maximum, commencer à décroître après avoir adopté une valeur maximum, et sa dérivée étant dans une plage prédéfinie.

4. Machine de préparation de boisson (1) selon l'une quelconque des revendications précédentes, dans laquelle l'unité électronique de commande (5) est en outre conçue pour :
- déterminer, sur la base de la sortie électrique du débitmètre de liquide d'infusion (13), si le débit de liquide d'infusion fourni à l'ensemble d'infusion (2) adopte une ou différentes deuxièmes caractéristiques prédéfinies indiquant l'existence d'une condition appropriée pour le démarrage de l'étape d'infusion de la substance d'infusion dans la chambre d'infusion avec le liquide d'infusion ; et
- lorsque l'on détermine que le débit de liquide d'infusion fourni à l'ensemble d'infusion (2) adopte les une ou différentes deuxièmes caractéristiques prédéfinies, commander le système de régulation de débit de liquide d'infusion (11) afin de commencer l'étape d'infusion de la substance d'infusion dans la chambre d'infusion avec le liquide d'infusion.

5. Machine de préparation de boisson (1) selon la revendication 4, dans laquelle la une ou les différentes deuxièmes caractéristiques prédéfinies sont définies par le fait que le débit de liquide d'infusion fourni à l'ensemble d'infusion (2) adopte, soit proche de, ou commence à se stabiliser à une valeur minimum pendant une décroissance après avoir atteint une valeur maximum.

6. Machine de préparation de boisson (1) selon l'une quelconque des revendications précédentes, dans laquelle l'unité électronique de commande (5) est en outre conçue pour réaliser l'étape pour infuser la substance d'infusion dans la chambre d'infusion avec le liquide d'infusion en mettant en œuvre un mode d'infusion à débit de liquide d'infusion contrôlé, comprenant :
- commander le système de régulation de débit de liquide d'infusion (11) pour s'opposer à une tendance naturelle du débit de liquide d'infusion fourni à l'ensemble d'infusion (2) à augmenter ;
- déterminer, sur la base de la sortie électrique du débitmètre de liquide d'infusion (13), si le débit de liquide d'infusion fourni à l'ensemble d'infusion (2) adopte une ou différentes troisièmes caractéristiques prédéfinies indicatives de la stabilisation du débit de liquide d'infusion fourni à l'ensemble d'infusion (2) ;
- lorsque l'on détermine que le débit du liquide d'infusion fourni à l'ensemble d'infusion (2) adopte les une ou plusieurs troisièmes caractéristiques prédéfinies, commander en boucle fermée le système de régulation de débit de liquide d'infusion (11) sur la base de la sortie électrique du débitmètre de liquide d'infusion (13) afin de maintenir le débit de liquide d'infusion stabilisé fourni à l'ensemble d'infusion (2).

7. Machine de préparation de boisson (1) selon la revendication 6, dans laquelle l'unité électronique de commande (5) est en outre conçue pour s'opposer à la tendance naturelle du débit du liquide d'infusion fourni à l'ensemble d'infusion (2) à augmenter pendant l'étape d'infusion de la substance d'infusion dans la chambre d'infusion avec le liquide d'infusion, en commandant en boucle ouverte le système de régulation de débit de liquide d'infusion (11).

8. Machine de préparation de boisson (1) selon la revendication 6 ou 7, dans laquelle l'une ou les différentes troisièmes caractéristiques prédéfinies sont définies par une variation du débit de liquide d'infusion fourni à l'ensemble d'infusion (2) qui est dans une plage prédéfinie.

9. Machine de préparation de boisson (1) selon l'une quelconque des revendications 6 à 8, dans laquelle l'unité électronique de commande (5) est en outre conçue pour permettre à un utilisateur de personnaliser l'étape d'infusion de la substance d'infusion en sélectionnant entre le mode d'infusion à débit de liquide d'infusion contrôlé susmentionné et un mode d'infusion à pression de liquide d'infusion constante.

10. Machine de préparation de boisson (1) selon l'une quelconque des revendications précédentes, dans laquelle le système de régulation de débit de liquide d'infusion (11) comprend une électrovanne de régulation de débit (11) à commande électronique ou une pompe d'alimentation (9) à vitesse variable à commande électronique.
